(19) Europäisches Patentamt / European Patent Office / Office européen des brevets

(11) **EP 3 970 949 B1**

(12) **EUROPEAN PATENT SPECIFICATION**

(45) Date of publication and mention
of the grant of the patent:
**18.09.2024 Bulletin 2024/38**

(21) Application number: **20805839.6**

(22) Date of filing: **13.05.2020**

(51) International Patent Classification (IPC):
**B29C 55/12** (2006.01)   **B29K 7/00** (2006.01)
**B29K 77/00** (2006.01)   **C08J 5/18** (2006.01)
**G02B 5/30** (2006.01)

(52) Cooperative Patent Classification (CPC):
**C08J 5/18; B29C 55/12; G02B 1/18;** C08J 2377/06;
G02B 5/30

(86) International application number:
**PCT/JP2020/019060**

(87) International publication number:
**WO 2020/230806 (19.11.2020 Gazette 2020/47)**

(54) **SEMIAROMATIC POLYAMIDE FILM AND METHOD FOR PRODUCING SAME**

HALBAROMATISCHER POLYAMIDFILM UND VERFAHREN ZUR HERSTELLUNG DAVON

FILM DE POLYAMIDE SEMI-AROMATIQUE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2019 JP 2019092510**

(43) Date of publication of application:
**23.03.2022 Bulletin 2022/12**

(73) Proprietor: **Unitika Ltd.**
**Osaka-shi, Osaka 541-8566 (JP)**

(72) Inventors:
• **OKABE, Takashi**
**Uji-shi, Kyoto 611-0021 (JP)**
• **YAMAMOTO, Masafumi**
**Uji-shi, Kyoto 611-0021 (JP)**
• **KIHARA, Sumito**
**Uji-shi, Kyoto 611-0021 (JP)**

(74) Representative: **Vigand, Philippe et al**
**Novagraaf International SA**
**Chemin de l'Echo 3**
**1213 Onex - Genève (CH)**

(56) References cited:
EP-A1- 2 641 931      WO-A1-2008/020569
WO-A1-2015/018588      WO-A1-2018/062266
JP-A- 2013 189 495      JP-A- 2015 150 842
JP-A- 2017 039 847      JP-A- 2018 035 319
JP-A- 2018 135 414

EP 3 970 949 B1

**Description**

Technical Field

The present invention relates to a semi-aromatic polyamide film with suppressed thermal shrinkage.

Background Art

Semi-aromatic polyamide films stretched in the longitudinal direction (lengthwise direction) and width direction (lateral direction) of the films are excellent in heat resistance and mechanical characteristics and therefore are utilized in various fields. Among semi-aromatic polyamides constituting semi-aromatic polyamide films, particularly, polyamide 9T including an aliphatic diamine having 9 carbon atoms and terephthalic acid as constituents, and polyamide 10T including an aliphatic diamine having 10 carbon atoms and terephthalic acid as constituents are excellent in mechanical characteristics and thermal characteristics.

For example, Patent Literature 1 discloses a biaxially stretched film including a semi-aromatic polyamide resin obtained by performing biaxial stretching, then performing heat setting treatment, and further performing relaxation treatment in the film width direction.

Citation List

Patent Literature

Patent Literature 1: International Publication No. WO 2012/067172

Summary of Invention

Technical Problem

In recent years, no occurrence of strain and the like during conveyance and during processing has been strictly required for optical films such as display members.

The film disclosed in Patent Literature 1 has a sufficiently reduced thermal shrinkage factor under the conditions of 200°C and 15 min. However, when the temperature is 250°C, the thermal shrinkage factor in the film longitudinal direction may increase significantly even under the condition of 5 min, and depending on the temperature condition during processing, deformation may not be avoided due to strain accompanying thermal shrinkage.

In addition, the film disclosed in Patent Literature 1 has high tensile breaking elongation in the longitudinal direction but may have low tensile breaking elongation in the width direction, and the film may break without being able to follow external stress.

It is an object of the present invention to provide a semi-aromatic polyamide film having the thermal shrinkage factor in the longitudinal direction of the film sufficiently reduced and having the tensile breaking elongation in the width direction of the film sufficiently improved.

Solution to Problem

As a result of diligent studies, the present inventors have found that a semi-aromatic polyamide film obtained by controlling the crystalline state of a film before stretching, stretching conditions, heat setting conditions, and relaxation conditions can achieve the object, and completed the present invention.

The semi-aromatic polyamide film of the present invention has

a thermal shrinkage factor in the longitudinal direction of the film, $S_{MD}$, of -1.0 to 1.5% and a thermal shrinkage factor in the width direction of the film, $S_{TD}$, of -1.0 to 1.5% as measured under the conditions of 250°C and 5 min, a tensile breaking elongation of 70% or more in the longitudinal direction and the width direction, and a haze of 14% or less.

According to the semi-aromatic polyamide film of the present invention, the absolute value of the difference between $S_{MD}$ and $S_{TD}$ ($|S_{MD} - S_{TD}|$) is preferably less than 1.2.

A method for producing the semi-aromatic polyamide film of the present invention includes:
biaxially stretching an unstretched film of a semi-aromatic polyamide, wherein in the biaxial stretching, an unstretched film having a crystallization enthalpy of 20 J/g or more is used.

According to the method for producing the semi-aromatic polyamide film of the present invention, in the biaxial stretching, the unstretched film is preferably stretched at a ratio of 2.0 to 3.5 times in the longitudinal direction and stretched at a ratio of 2.0 to 4.0 times in the width direction.

According to the method for producing the semi-aromatic polyamide film of the present invention, the film after the biaxial stretching is preferably subjected to heat setting treatment at 260 to 280°C and subjected to relaxation treatment at relaxation rates of 1.0 to 10.0% in the longitudinal direction and 1.0 to 12.0% in the width direction.

The electronic material of the present invention uses the semi-aromatic polyamide film.

The optical component of the present invention uses the semi-aromatic polyamide film.

Advantageous Effects of Invention

The present invention can provide a semi-aromatic polyamide film having a small thermal shrinkage factor in the width direction of the film and a small thermal shrinkage factor in the longitudinal direction under the conditions of 250°C and 5 min, being excellent in dimensional stability, and having sufficiently improved tensile breaking elongation in the longitudinal direction of the film and sufficiently improved tensile breaking elongation in the width direction.

Even if the semi-aromatic polyamide film of the present invention contains a lubricant for the improvement of slipperiness, an increase in haze is suppressed, so that the transparency is excellent.

The semi-aromatic polyamide film of the present invention can be preferably used as electronic material films such as substrate films and coverlay films for FPCs, optical films used as substrates for display materials, heat-resistant tapes, and the like.

Description of Embodiments

The semi-aromatic polyamide film of the present invention has a thermal shrinkage factor in the longitudinal direction of the film, $S_{MD}$, of -1.0 to 1.5% and a thermal shrinkage factor in the width direction of the film, $S_{TD}$, of -1.0 to 1.5% as measured under the conditions of 250°C and 5 min, a tensile breaking elongation of 70% or more, and a haze of 14% or less.

<Semi-aromatic Polyamide>

The semi-aromatic polyamide constituting the semi-aromatic polyamide film of the present invention includes an aromatic dicarboxylic acid component and an aliphatic diamine component.

The aromatic dicarboxylic acid component preferably contains 60 mol % or more, more preferably 70 mol % or more, and further preferably 85 mol % or more of terephthalic acid. When the content of terephthalic acid is less than 60 mol %, the heat resistance and low water absorbency of the obtained film may decrease.

Examples of aromatic dicarboxylic acid components other than terephthalic acid include isophthalic acid and naphthalenedicarboxylic acids (1,2-isomer, 1,3-isomer, 1,4-isomer, 1,5-isomer, 1,6-isomer, 1,7-isomer, 1,8-isomer, 2,3-isomer, 2,6-isomer, and 2,7-isomer).

The semi-aromatic polyamide may contain a dicarboxylic acid component other than an aromatic dicarboxylic acid component as a dicarboxylic acid component in a range not impairing the effects of the present invention. Examples of other dicarboxylic acids include aliphatic dicarboxylic acids such as oxalic acid, malonic acid, succinic acid, glutaric acid, adipic acid, sebacic acid, dodecanedioic acid, tetradecanedioic acid, and octadecanedioic acid.

The aliphatic diamine component preferably includes an aliphatic diamine having 6 to 12 carbon atoms as a main component, more preferably includes an aliphatic diamine having 9 to 12 carbon atoms as a main component, and further preferably includes an aliphatic diamine having 9 or 10 carbon atoms as a main component.

The content of the aliphatic diamine having 6 to 12 carbon atoms in the aliphatic diamine component is preferably 60 mol % or more, more preferably 75 mol % or more, and further preferably 90 mol % or more. When the content of the aliphatic diamine having 6 to 12 carbon atoms is 60 mol % or more, the obtained film can achieve both heat resistance and productivity. One aliphatic diamine having 6 to 12 carbon atoms may be used alone, or two or more aliphatic diamines having 6 to 12 carbon atoms may be used in combination. When two or more aliphatic diamines having 6 to 12 carbon atoms are used in combination, the content is the total content of the aliphatic diamines having 6 to 12 carbon atoms.

Examples of the aliphatic diamine having 6 to 12 carbon atoms include linear aliphatic diamines, 1,6-hexanediamine, 1,7-heptanediamine, 1,8-octanediamine, 1,9-nonanediamine, 1,10-decanediamine, 1,11-undecanediamine, and 1,12-dodecanediamine, and branched aliphatic diamines such as 2-methyl-1,8-octanediamine, 4-methyl-1,8-octanediamine, 5-methyl-1,9-nonanediamine, 2,2,4-/2,4,4-trimethyl-1,6-hexanediamine, 2-methyl-1,5-pentanediamine, 2-methyl-1,6-hexanediamine, and 2-methyl-1,7-heptanediamine.

Examples of aliphatic diamines other than aliphatic diamines having 6 to 12 carbon atoms include linear aliphatic diamines such as 1,4-butanediamine and 1,5-pentanediamine.

The semi-aromatic polyamide may contain a diamine component other than an aliphatic diamine component as a diamine component in a range not impairing the effects of the present invention. Examples of other diamines include alicyclic diamines such as isophoronediamine, norbornanedimethylamine, and tricyclodecanedimethylamine, and aromatic diamines such as meta-xylylenediamine, para-xylylenediamine, meta-phenylenediamine, and para-phenylenediamine.

In the semi-aromatic polyamide, a lactam such as ε-caprolactam, ζ-enantholactam, η-capryllactam, or ω-laurolactam may be copolymerized in a range not impairing the effects of the present invention.

The types and copolymerization ratio of the monomers constituting the semi-aromatic polyamide are preferably selected so that the melting point (Tm) of the obtained semi-aromatic polyamide is in the range of 270 to 350°C. When the semi-aromatic polyamide has Tm in the range, pyrolysis when the semi-aromatic polyamide is processed into a film can be efficiently suppressed. When Tm is less than 270°C, the obtained film may have insufficient heat resistance. On the other hand, when Tm is more than 350°C, pyrolysis may occur during film production.

The inherent viscosity of the semi-aromatic polyamide is preferably 0.8 to 2.0 dL/g, more preferably 0.9 to 1.8 dL/g. When the semi-aromatic polyamide has an inherent viscosity of 0.8 dL/g or more, a film excellent in mechanical strength can be made, but when the semi-aromatic polyamide has an inherent viscosity of more than 2.0 dL/g, it may be difficult to produce a film.

The semi-aromatic polyamide may include a polymerization catalyst and a terminal blocking agent. Examples of the terminal blocking agent include acetic acid, lauric acid, benzoic acid, octylamine, cyclohexylamine, and aniline. Examples of the polymerization catalyst include phosphoric acid, phosphorous acid, hypophosphorous acid, or salts thereof.

<Semi-aromatic Polyamide Film>

The semi-aromatic polyamide film of the present invention needs to have a thermal shrinkage factor in the longitudinal direction of the film, $S_{MD}$, of -1.0 to 1.5% and a thermal shrinkage factor in the width direction of the film, $S_{TD}$, of -1.0 to 1.5% as measured under the conditions of 250°C and 5 min and preferably has a thermal shrinkage factor in the longitudinal direction of the film, $S_{MD}$, of -0.8 to 1.3% and a thermal shrinkage factor in the width direction of the film, $S_{TD}$, of -0.8 to 1.3%, more preferably a thermal shrinkage factor in the longitudinal direction of the film, $S_{MD}$, of -0.6 to 1.0% and a thermal shrinkage factor in the width direction of the film, $S_{TD}$, of -0.6 to 1.0%. The semi-aromatic polyamide film has improved dimensional stability and is excellent in heat resistance by having a thermal shrinkage factor of 1.5% or less. On the other hand, when the semi-aromatic polyamide film has a thermal shrinkage factor of more than 1.5%, the dimensional change increases when the semi-aromatic polyamide film is processed at high temperature. Therefore, processing trouble occurs, causing problems.

In the semi-aromatic polyamide film of the present invention, the absolute value of the difference between the thermal shrinkage factor in the longitudinal direction $S_{MD}$ and the thermal shrinkage factor in the width direction $S_{TD}$ ($|S_{MD} - S_{TD}|$) measured under the conditions of 250°C and 5 min is preferably less than 1.2, more preferably less than 1.1, and further preferably less than 1.0. When $|S_{MD} - S_{TD}|$ is less than 1.2 in the semi-aromatic polyamide film, the thermal shrinkage factors in the longitudinal direction and the width direction are equal, and the anisotropy is reduced, and even when heat is applied to the film with reflow solder, laminating processing to another material, or the like, the occurrence of strain and warpage can be suppressed.

In addition, the semi-aromatic polyamide film of the present invention needs to have a tensile breaking elongation of 70% or more in the longitudinal direction and the width direction as measured in accordance with JIS K7127 and preferably has a tensile breaking elongation of 70 to 150%, more preferably 80 to 140%. When the semi-aromatic polyamide film has a tensile breaking elongation of 70% or more, the semi-aromatic polyamide film is excellent in deformation followability and therefore does not break with external stress and is a deformable film. On the other hand, when the semi-aromatic polyamide film has a tensile breaking elongation of less than 70%, the semi-aromatic polyamide film cannot follow external stress and breaks. In the semi-aromatic polyamide film of the present invention, the tensile breaking elongation in the longitudinal direction and the width direction need not necessarily be equal. Even if the tensile breaking elongation in the longitudinal direction and the width direction is in an unbalanced relationship, the tensile breaking elongation in the longitudinal direction and the width direction is allowed as long as the preferred numerical value range of the tensile breaking elongation is satisfied, for example, the tensile breaking elongation in the longitudinal direction is 140% and the tensile breaking elongation in the width direction is 80%, or the tensile breaking elongation in the longitudinal direction is 80% and the tensile breaking elongation in the width direction is 140%.

Further, the semi-aromatic polyamide film of the present invention needs to have a haze of 14% or less as measured in accordance with JIS K7105 and preferably has a haze of 120 or less, more preferably 10% or less. Further, a semi-aromatic polyamide film having a thickness of 25 μm or less preferably has a haze of 7% or less, more preferably 6% or less, and further preferably 5% or less. The semi-aromatic polyamide film is excellent in visibility by having a haze of 14% or less. On the other hand, a semi-aromatic polyamide film having a haze of more than 14% is poor in visibility.

The semi-aromatic polyamide film of the present invention preferably has a moisture absorption elongation in the longitudinal direction of the film, $N_{MD}$, of 1% or less and a moisture absorption elongation in the width direction of the film, $N_{TD}$, of 1% or less, more preferably a moisture absorption elongation in the longitudinal direction of the film, $N_{MD}$, of 0.8% or less and a moisture absorption elongation in the width direction of the film, $N_{TD}$, of 0.8% or less, and further preferably a moisture absorption elongation in the longitudinal direction of the film, $N_{MD}$, of 0.50 or less and a moisture absorption elongation in the width direction of the film, $N_{TD}$, of 0.50 or less as measured under the conditions of 20°C and 90% RH.

The absolute value of the difference between the moisture absorption elongation in the longitudinal direction $N_{MD}$ and the moisture absorption elongation in the width direction $N_{TD}$ ($|N_{MD} - N_{TD}|$) measured under the conditions of 20°C and 90% RH is preferably less than 0.3, more preferably less than 0.2, and further preferably less than 0.1. When $|N_{MD} - N_{TD}|$ is less than 0.3 in the semi-aromatic polyamide film, the elongation in the longitudinal direction and the width direction under moisture absorption conditions are equal, and the occurrence of strain and warpage can be suppressed.

The semi-aromatic polyamide film of the present invention has a thermal shrinkage factor in the longitudinal direction of the film, $S_{MD}$, and a thermal shrinkage factor in the width direction of the film, $S_{TD}$, in the predetermined range as measured under the conditions of 250°C and 5 min, and thus the dimensional stability when the semi-aromatic polyamide film is subjected to a thermal history during film processing and the like can be enhanced. In addition, the semi-aromatic polyamide film of the present invention has moisture absorption elongation in the above range, and thus dimensional change due to humidity can be suppressed during film processing and the like. In other words, in the film, the dimensional stability in moisture absorption can be enhanced, and not only can the positioning during the lamination of another material and the dimensional accuracy during punching be enhanced, but also the fear of the occurrence of curling and strain after the lamination of another material can be reduced.

<Method for Producing Semi-aromatic Polyamide Film>

The semi-aromatic polyamide film of the present invention can be produced by using an unstretched film having a crystallization enthalpy of 20 J/g or more and, for example, stretching the unstretched film at a ratio of 2.0 to 3.5 times in the longitudinal direction and at a ratio of 2.0 to 4.0 times in the width direction, in the step of biaxially stretching an unstretched film of a semi-aromatic polyamide, subjecting the film after the biaxial stretching to heat setting treatment at 260 to 280°C, and subjecting the film to relaxation treatment at relaxation rates of 1.0 to 10.0% in the longitudinal direction and 1.0 to 12.0% in the width direction.

(Semi-aromatic Polyamide)

As the semi-aromatic polyamide for producing the semi-aromatic polyamide film, a commercial product can be preferably used. Examples of such a commercial product include "Genestar (registered trademark)" manufactured by KURARAY CO., LTD., "XecoT (registered trademark)" manufactured by UNITIKA LTD., "Reny (registered trademark)" manufactured by Mitsubishi Engineering-Plastics Corporation, "ARLEN (registered trademark)" manufactured by Mitsui Chemicals, Inc., and "Ultramid (registered trademark)" manufactured by BASF.

The semi-aromatic polyamide can be produced using a method known as a method for producing a crystalline polyamide. Examples of the method include a solution polymerization method or an interfacial polymerization method using an acid chloride and a diamine component as raw materials (A method), a method of making an oligomer using a dicarboxylic acid component and a diamine component as raw materials, and polymerizing the oligomer by melt polymerization or solid phase polymerization (B method), a method of forming a crushed mixture of a salt and an oligomer using a dicarboxylic acid component and a diamine component as raw materials, and solid phase-polymerizing the crushed mixture (C method), or a method of forming a salt using a dicarboxylic acid component and a diamine component as raw materials, and solid phase-polymerizing the salt (D method). Especially, the C method and the D method are preferred, and the D method is more preferred. In the C method and the D method, compared with the B method, a crushed mixture of a salt and an oligomer or a salt can be formed at low temperature, and a large amount of water is not needed during the formation of a crushed mixture of a salt and an oligomer or a salt. Therefore, the formation of a gel-like body can be reduced, and fisheyes can be reduced.

In the B method, for example, an oligomer can be obtained by mixing a diamine component, a dicarboxylic acid component, and a polymerization catalyst at once to prepare a nylon salt, and heat-polymerizing the nylon salt at a temperature of 200 to 250°C. The inherent viscosity of the oligomer is preferably 0.1 to 0.6 dL/g. An advantage of setting the inherent viscosity of the oligomer in this range is that in the following solid phase polymerization or melt polymerization, the molar balance between the carboxyl groups in the dicarboxylic acid component and the amino groups in the diamine component is not disturbed, and the polymerization rate can be increased. When the inherent viscosity of the oligomer is less than 0.1 dL/g, the polymerization time is long, and the productivity may be poor. On the other hand, when the inherent viscosity of the oligomer is more than 0.6 dL/g, the obtained semi-aromatic polyamide may be colored.

The solid phase polymerization of the oligomer is preferably performed under reduced pressure or under an inert gas flow. The temperature of the solid phase polymerization is preferably 200 to 280°C. By setting the temperature of the solid phase polymerization in this range, the coloration and gelation of the obtained semi-aromatic polyamide can be suppressed. When the temperature of the solid phase polymerization is less than 200°C, the polymerization time is long, and therefore the productivity may be poor. On the other hand, when the temperature of the solid phase polymerization is more than 280°C, coloration and gelation may occur in the obtained semi-aromatic polyamide.

The melt polymerization of the oligomer is preferably performed at a temperature of 350°C or less. When the polymerization temperature is more than 350°C, the decomposition and thermal deterioration of the semi-aromatic polyamide may be promoted. Therefore, a film obtained from such a semi-aromatic polyamide may be poor in strength and appearance. The melt polymerization also includes melt polymerization using a melt extruder.

In the C method, for example, a suspension including an aliphatic diamine in a molten state and a solid aromatic dicarboxylic acid is stirred and mixed to obtain a mixed liquid. Then, in this mixed liquid, a salt formation reaction by the reaction of the aromatic dicarboxylic acid and the aliphatic diamine, and an oligomer formation reaction by the polymerization of the formed salt are performed at a temperature less than the melting point of the finally formed semi-aromatic polyamide to obtain a mixture of a salt and an oligomer. In this case, crushing may be performed while the reactions are performed, or crushing may be performed after the reaction product is once taken out after the reactions. Then, the obtained reaction product is solid phase-polymerized at a temperature less than the melting point of the finally formed semi-aromatic polyamide to increase the molecular weight to a predetermined molecular weight to obtain the semi-aromatic polyamide. The solid phase polymerization is preferably performed in a gas flow of an inert gas such as nitrogen with a polymerization temperature of 180 to 270°C and a reaction time of 0.5 to 10 h.

In the D method, for example, an aromatic dicarboxylic acid powder is previously heated to a temperature equal to or more than the melting point of an aliphatic diamine and equal to or less than the melting point of the aromatic dicarboxylic acid, and the aliphatic diamine is added to the aromatic dicarboxylic acid powder at this temperature with substantially no water contained so as to keep the powder state of the aromatic dicarboxylic acid, to make a salt. Then, the obtained salt is solid phase-polymerized at a temperature less than the melting point of the finally formed semi-aromatic polyamide to increase the molecular weight to a predetermined molecular weight to obtain the semi-aromatic polyamide. The solid phase polymerization is preferably performed in a gas flow of an inert gas such as nitrogen with a polymerization temperature of 180 to 270°C and a reaction time of 0.5 to 10 h.

The raw materials of the semi-aromatic polyamide film may be a mixture of the virgin raw materials and may be nonstandard films formed when semi-aromatic polyamide films are produced, a scrap mixture generated as edge trimmings, or a material prepared by adding virgin raw materials to the scrap mixture. The mixing can be performed by a known method such as a method of dry blending by a known apparatus, or a kneading method of melting and kneading and mixing using a single-screw or twin-screw extruder.

(Additives)

The semi-aromatic polyamide film of the present invention includes the semi-aromatic polyamide and may contain additives such as a lubricant, a colorant such as a pigment such as titanium or a dye, a coloration preventing agent, a heat stabilizer, an antioxidant such as a hindered phenol, a phosphate ester or a phosphite ester, a weather resistance improving agent such as a benzotriazole-based compound, a bromine-based or phosphorus-based flame retardant, a plasticizer, a release agent, a reinforcing agent such as talc, a modifier, an antistatic agent, an ultraviolet absorbing agent, an antifogging agent, and various polymer resins, as needed, within a range not sacrificing various characteristics as a film, in order to further improve the various characteristics of the semi-aromatic polyamide film.

Examples of the lubricant making slipperiness good can include inorganic particles such as silica, alumina, titanium dioxide, calcium carbonate, kaolin, and barium sulfate. Examples of organic fine particles can include acrylic resin particles, melamine resin particles, silicone resin particles, and crosslinked polystyrene particles. The average particle diameter of the lubricant is preferably 0.05 to 5.0 μm. The content of the lubricant is preferably 0.2% by mass or less but can be selected according to friction characteristics, optical characteristics, and other characteristics required of the film.

As the method for allowing the semi-aromatic polyamide film to contain the additives, various methods can be used. Examples of typical methods thereof can include the following methods:

(A) a method of adding the additives during the polymerization of the semi-aromatic polyamide
(B) a masterbatch method of directly adding the additives to the semi-aromatic polyamide and melting and kneading the mixture to prepare pellets
(C) a method of directly adding the additives to the semi-aromatic polyamide and melting and kneading the mixture by an extruder during film formation
(D) a method of directly adding the additives to an extruder and melting and kneading the mixture during film formation

(Extrusion)

In the method for producing the semi-aromatic polyamide film of the present invention, the unstretched film of the semi-aromatic polyamide used in the biaxial stretching step needs to have a crystallization enthalpy of 20 J/g or more and preferably has a crystallization enthalpy of 25 J/g or more. When the crystallization enthalpy of the unstretched film is less than 20 J/g, crystallization proceeds in a semi-aromatic polyamide film obtained by biaxially stretching the unstretched film, and therefore the tensile breaking elongation decreases, and the haze increases when the semi-aromatic polyamide film contains a lubricant such as silica. An unstretched film having a crystallization enthalpy of less than 20 J/g is unstably stretched, or cannot be stretched due to the frequent occurrence of cutting, in some cases, and higher stretching force is needed at the initial stage of stretching, and therefore it is difficult to obtain a stretched film having uniform thickness.

The unstretched film of the semi-aromatic polyamide having a crystallization enthalpy of 20 J/g or more can be produced by melting and mixing the semi-aromatic polyamide in an extruder at a temperature of 280 to 340°C for 3 to 15 min, then extruding the semi-aromatic polyamide into a sheet shape through a T-die, and adhering this sheet-shaped material to a cooling roll having the temperature regulated at 30 to 40°C to cool the sheet-shaped material. When the temperature of the cooling roll is more than 40°C, the obtained unstretched sheet has a crystallization enthalpy of less than 20 J/g, and the above problems occur after stretching.

(Stretching)

In the method for producing the semi-aromatic polyamide film of the present invention, the unstretched film is biaxially stretched, and the semi-aromatic polyamide is oriented and crystallized by the stretching.

The stretching method is not particularly limited, and a flat sequential biaxial stretching method, a flat simultaneous biaxial stretching method, a tubular method, or the like can be used. Especially, the flat simultaneous biaxial stretching method is optimal because the film thickness accuracy is good, and the physical properties in the film width direction are uniform. Examples of the stretching apparatus for adopting the flat simultaneous biaxial stretching method include a screw type tenter, a pantograph type tenter, and a linear motor-driven clip type tenter.

The stretching ratios are preferably 2.0 to 3.5 times in the longitudinal direction and 2.0 to 4.0 times in the width direction, more preferably 2.0 to 3.0 times in the longitudinal direction and 2.0 to 3.5 times in the width direction.

In the case of sequential biaxial stretching, when the stretching ratio in the longitudinal direction is more than 3.5 times, crystallization proceeds too much in the obtained stretched film, and the stretchability in the width direction may decrease. Even when stretching in the width direction can be performed, stretching unevenness is likely to occur in the obtained stretched film, and the thickness accuracy may decrease, the tensile breaking elongation in the longitudinal direction may decrease, and the transparency may decrease.

In the sequential biaxial stretching method, the stretching ratios are further preferably 2.3 to 2.5 times in the longitudinal direction and 3.3 to 3.5 times in the width direction.

In the case of simultaneous biaxial stretching, when the stretching ratio in the longitudinal direction is more than 3.5 times, the thermal shrinkage factor may increase, and the dimensional stability may decrease in the obtained stretched film. On the other hand, when the stretching ratio in the width direction is more than 4.0 times, the thermal shrinkage factor may increase, the dimensional stability may decrease, and further the tensile breaking elongation may decrease.

In the simultaneous biaxial stretching method, when a biaxially stretched film having a thickness of 1 to 25 μm is obtained, the stretching ratios are preferably 2.5 to 3.0 times in the longitudinal direction and 2.5 to 3.3 times in the width direction, and when a biaxially stretched film having a thickness of 26 to 50 μm is obtained, the stretching ratios are preferably 3.0 to 3.5 times in the longitudinal direction and 2.8 to 3.3 times in the width direction.

When the stretching ratios in the longitudinal direction and the width direction are less than 2.0 times, stretching unevenness is likely to occur in the obtained stretched film, and thickness unevenness may occur, and the planarity may decrease.

For the stretching rates, the stretching strain rates in the longitudinal direction and the width direction are both preferably more than 400%/min, more preferably 800 to 12000%/min, and further preferably 1200 to 6000%/min. When the strain rates are 400%/min or less, crystals grow during the stretching, and the film may break. On the contrary, when the strain rates are too fast, the unstretched sheet cannot follow deformation and may break.

The stretching temperature is preferably the glass transition temperature (Tg) of the semi-aromatic polyamide or more, more preferably more than Tg and (Tg + 50°C) or less. When the stretching temperature is less than Tg, the film is likely to break, and stable production cannot be performed. On the contrary, when the stretching temperature is more than (Tg + 50°C), stretching unevenness may occur in the film.

(Heat Setting)

After being subjected to the stretching, the semi-aromatic polyamide film is preferably subjected to heat setting treatment with the film held by the clips used during the stretching. In the film obtained by being subjected to heat setting treatment, no heat-induced unevenness occurs, and the thermal shrinkage factors can be reduced. The heat setting treatment temperature is preferably 260 to 280°C, more preferably 263 to 278°C, and further preferably 265 to 275°C. When the heat setting treatment temperature is less than 260°C, the thermal shrinkage factors increase in the obtained film. When the heat setting treatment temperature is more than 280°C, the tensile breaking elongation decreases, and poor appearance due to heat-induced wrinkles is likely to occur in the obtained film, and in some cases, breakage occurs during the heat setting treatment, and it is difficult to obtain a biaxially stretched film.

In the sequential biaxial stretching method, the heat setting temperature is preferably 260 to 275°C. In the simultaneous biaxial stretching method, when a biaxially stretched film having a thickness of 1 to 25 $\mu$m is obtained, the heat setting temperature is preferably 260 to 280°C, and when a biaxially stretched film having a thickness of 26 to 50 $\mu$m is obtained, the heat setting temperature is preferably 260 to 275°C.

Examples of the heat setting treatment method include known methods such as a method of blowing hot air, a method of irradiation with infrared rays, and a method of irradiation with microwaves. Especially, the method of blowing hot air is preferred because heating can be uniformly performed with good accuracy.

(Relaxation)

The film after being subjected to the heat setting treatment is subjected to relaxation treatment at relaxation rates of 1.0 to 10.0% in the longitudinal direction and 1.0 to 12.0% in the width direction at the same temperature as the heat setting treatment temperature with the film held by the clips. When the relaxation rates in the longitudinal direction and the width direction are less than 1.0%, a film having sufficiently reduced thermal shrinkage factors cannot be obtained. When the relaxation rate in the longitudinal direction is more than 10.0%, slack may occur in the film. By performing relaxation treatment at relaxation rates of 1.0 to 10.0% in the longitudinal direction and 1.0 to 12.0% in the width direction, a film having reduced thermal shrinkage factors and enhanced dimensional stability can be obtained.

In the sequential biaxial stretching method, when a biaxially stretched film having a thickness of 1 to 50 $\mu$m is obtained, the relaxation rates are preferably 1.0 to 6.0% in the longitudinal direction and 1.0 to 12.0% in the width direction, and when a biaxially stretched film having a thickness of 51 to 150 $\mu$m is obtained, the relaxation rates are preferably 1.0 to 3.0% in the longitudinal direction and 6.0 to 12.0% in the width direction.

In the simultaneous biaxial stretching method, the relaxation rates are preferably 1.0 to 6.0% in the longitudinal direction and 1.0 to 12.0% in the width direction.

The relaxation treatments of the film in the longitudinal direction and/or the width direction are each independently controlled during the production of the film, and in either the simultaneous biaxial stretching method or the sequential biaxial stretching method, the absolute value of the difference between the relaxation rate in the longitudinal direction and the relaxation rate in the width direction is preferably 2 or less. Thus, in the obtained biaxially stretched film, the moisture absorption elongation is reduced, and the absolute value of the difference between the moisture absorption elongation in the longitudinal direction $N_{MD}$ and the moisture absorption elongation in the width direction $N_{TD}$ ($|N_{MD} - N_{TD}|$) is reduced, and in a laminate having another material laminated, the occurrence of curling during moisture absorption is suppressed.

In the simultaneous biaxial stretching method, the relaxation treatment can be simultaneously or separately performed in-line in the longitudinal direction and the width direction. When the relaxation treatment is separately performed, examples include a method of performing relaxation in the longitudinal direction and then performing relaxation in the width direction, and a method of performing relaxation in the width direction and then performing relaxation in the longitudinal direction.

On the other hand, in the sequential biaxial stretching method, the relaxation treatment can be (i) simultaneously performed in-line in the longitudinal direction and the width direction after lengthwise stretching and lateral stretching are performed and heat setting treatment is performed, and (ii) it is also possible to perform lengthwise stretching, then perform relaxation treatment in the longitudinal direction, then perform lateral stretching, perform heat setting treatment, and then perform relaxation treatment in the width direction. In (ii), when lengthwise stretching and relaxation treatment in the longitudinal direction are performed, and then heat setting treatment is performed, the obtained film is in a state difficult to laterally stretch, and therefore it is not preferred to perform heat setting treatment at a stage before lateral stretching. In the (i) and (ii) sequential biaxial stretching methods, lengthwise stretching is performed first, and then lateral stretching is performed, but in the sequential biaxial stretching method, it is permissible to perform lateral stretching first and then perform lengthwise stretching.

Alternatively, for the relaxation treatment, it is also possible to biaxially stretch the film, then subject the film to relaxation treatment in-line in the width direction, then once wind the film, and pass the film off-line through a drying furnace set at a predetermined temperature under low tension for relaxation treatment in the longitudinal direction.

The thickness of the semi-aromatic polyamide film of the present invention is appropriately changed according to the application and the purpose but is preferably 1 to 150 $\mu$m, more preferably 10 to 100 $\mu$m, and further preferably 20 to 80 $\mu$m.

The semi-aromatic polyamide resin constituting the semi-aromatic polyamide film of the present invention has very high crystallinity. Therefore, when the sequential biaxial stretching method is applied, orientation and crystallization are likely to occur when the film in an unstretched state is stretched in the longitudinal direction or the width direction. It may be difficult to subject the oriented and crystallized film to the following stretching in the orthogonal direction. Therefore, it is desirable to apply the simultaneous biaxial stretching method. On the other hand, when the semi-aromatic polyamide film of the present invention has a thickness of more than 50 $\mu$m, the stretching force during stretching is too high in the simultaneous biaxial stretching method, and therefore the difficulty of stretching increases significantly. Therefore, in the biaxial stretching of such a film having high stretching force, it is preferred to apply the sequential biaxial stretching method rather than the simultaneous biaxial stretching method.

In the apparatus for producing the semi-aromatic polyamide film of the present invention, the surfaces of the cylinder, the melting portion of the barrel, the measuring portion, the single pipe, the filter, the T-die, and the like are preferably subjected to treatment for decreasing the roughness of the surfaces in order to prevent the residence of the resin. Examples of the method for decreasing the roughness of the surfaces include a method of modifying the surfaces with a substance having low polarity, or a method of vapor-depositing silicon nitride or diamond-like carbon on the surfaces.

The obtained semi-aromatic polyamide film may be formed into a single sheet, or formed in the form of a film roll by being wound around a winding roll. From the viewpoint of productivity in utilization in various applications, the semi-aromatic polyamide film is preferably formed in the form of a film roll. When formed into a film roll, the semi-aromatic polyamide film may be slit with the desired width.

The semi-aromatic polyamide film may be a single-layer film composed of one layer, or a multilayer structure obtained by laminating two or more layers. When a multilayer structure is formed, for example, a lubricant can be contained in any one of two layers in a film of two-layer structure, and a lubricant can be contained in each of layers located on both surfaces among three layers in a film of three-layer structure. The type and content of the contained lubricant can be independently designed for each. By forming such a multilayer structure, the surface roughness of each surface of the semi-aromatic polyamide film can be independently controlled.

The surface of the semi-aromatic polyamide film may be subjected to corona treatment, plasma treatment, acid treatment, flame treatment, or the like in order to make adhesiveness to another material good.

Inorganic matter such as a metal or an oxide thereof, another polymer, paper, woven fabric, nonwoven fabric, wood, or the like may be laminated on the semi-aromatic polyamide film of the present invention.

<Applications>

The semi-aromatic polyamide film of the present invention is excellent in dimensional stability while having heat resistance, and therefore can be used for various electronic materials and optical components and other applications.

Specifically, the semi-aromatic polyamide film of the present invention can be used as films for household use and for industrial materials, such as packaging materials for drugs; packaging materials for food such as retort food; packaging materials for electronic components such as semiconductor packages; electrical insulating materials for motors, transformers, cables, and the like; dielectric materials for capacitor applications and the like; materials for magnetic tapes such as cassette tapes, magnetic tapes for data storage for digital data storage, and video tapes; protective plates for solar cell substrates, liquid crystal plates, electrically conductive films, display equipment, and the like; electronic substrate materials for LED mounting substrates, substrates for flexible printed wiring, flexible flat cables, and the like; heat-resistant tapes such as coverlay films for flexible printed wiring, tapes for heat-resistant masking, and industrial process tapes; heat-resistant bar code labels; heat-resistant reflectors; insulating tapes; various release films; heat-resistant base films; photographic films; materials for molding; agricultural materials; medical materials; materials for civil engineering and construction; and filtration membranes.

Further, the semi-aromatic polyamide film of the present invention is excellent in the characteristics, that is, heat resistance, dimensional stability, and transparency and therefore can be used for applications such as display materials in mobile equipment and the like, and display apparatuses. Specifically, the semi-aromatic polyamide film of the present invention can be used as base material films in various functional materials such as optical substrates, polarizing plates, and phase difference plates in various displays and the like using elements such as liquid crystals, organic EL, and protective and sealing films in light emitting devices and display apparatuses.

Examples

The present invention will be specifically described below by Examples.

1. Evaluation Methods

(1) Inherent Viscosity of Semi-aromatic Polyamide

The value obtained by obtaining the intrinsic viscosity ($\eta_{inh}$) of a resin in concentrated sulfuric acid at 30°C at concentrations of 0.05, 0.1, 0.2, and 0.4 g/dL from the following formula and extrapolating the intrinsic viscosity ($\eta_{inh}$) to zero concentration was taken as the inherent viscosity [$\eta$].

$$\eta_{inh} = [\ln(t_1/t_0)]/c$$

wherein $\eta_{inh}$ represents intrinsic viscosity (dL/g), $t_0$ represents the flow time (s) of the solvent, $t_1$ represents the flow time (s) of the resin solution, and c represents the concentration (g/dL) of the resin in the solution.

(2) Melting Point and Glass Transition Temperature of Semi-aromatic Polyamide

A semi-aromatic polyamide was heated from 20°C to 350°C at 10°C/min and maintained for 5 min (1st Scan) and then cooled from 350°C to 20°C at 100°C/min and maintained for 5 min under a nitrogen atmosphere using a differential scanning calorimeter apparatus (manufactured by PerkinElmer Inc., DSC-7). The glass transition temperature in the process of further reheating the semi-aromatic polyamide from 20°C to 350°C at 10°C/min (2nd Scan) was taken as Tg of the semi-aromatic polyamide. Similarly, the peak top temperature of the crystal melting peak observed in 2nd Scan was taken as Tm.

(3) Crystallization enthalpy of Unstretched Film

10 mg of an unstretched sheet of a semi-aromatic polyamide was heated from 40°C to 350°C at 20°C/min (1st Scan) under a nitrogen atmosphere using a differential scanning calorimeter (manufactured by PerkinElmer Inc., DSC-7), and the enthalpy associated to the obtained exothermic peak was obtained.

(4) Thermal Shrinkage factors of Semi-aromatic Polyamide Film

Strip-shaped test pieces (10 mm wide × 100 mm long) were cut in the longitudinal direction and the width direction of a semi-aromatic polyamide film, respectively. The obtained test pieces were each treated under a 250°C atmosphere for 5 min and then allowed to stand at a temperature of 23°C and a humidity of 50% RH for 2 h. Then, the dimension in the length direction was measured, and the thermal shrinkage factor of the test piece in the longitudinal direction, $S_{MD}$, and the thermal shrinkage factor of the test piece in the width direction, $S_{TD}$, were obtained by the following formula:

thermal shrinkage factor (%) = [{original length - length after treatment}/original length] × 100

For Comparative Examples 1 to 4, in addition to the measurement of the thermal shrinkage factors in the treatment under a 250°C atmosphere for 5 min, the measurement of the thermal shrinkage factors in treatment under a 200°C atmosphere for 15 min was also performed.

The absolute value of the difference between the thermal shrinkage factor in the longitudinal direction $S_{MD}$ and the thermal shrinkage factor in the width direction $S_{TD}$ ($|S_{MD} - S_{TD}|$) was also calculated, and the anisotropy of the thermal shrinkage factor was evaluated according to the following criteria:

Excellent: $|S_{MD} - S_{TD}|$ is less than 0.4
Good: $|S_{MD} - S_{TD}|$ is 0.4 or more and less than 0.8
Fair: $|S_{MD} - S_{TD}|$ is 0.8 or more and less than 1.2
Poor: $|S_{MD} - S_{TD}|$ is 1.2 or more

(5) Tensile Breaking Elongation of Semi-aromatic Polyamide Film

The tensile breaking elongation of a semi-aromatic polyamide film in the longitudinal direction and the width direction was measured in accordance with JIS K7127.

(6) Haze of Semi-aromatic Polyamide Film

The haze of a semi-aromatic polyamide film was measured in accordance with JIS K7105 using a haze meter (NDH 2000) manufactured by Nippon Denshoku Industries Co., Ltd.

(7) Moisture Absorption Elongation of Semi-aromatic Polyamide Film

A semi-aromatic polyamide film was allowed to stand in an environment at a temperature of 20°C and a humidity of 40% RH for 2 days, and then a test piece (200 mm wide $\times$ 300 mm long) was cut and marked with a gauge length of 100 mm in the length direction and the width direction. The test piece was subjected to moisture absorption treatment in an environment at a temperature of 20°C and a humidity of 90% RH for 2 days, and then the gauge length in the length direction and the width direction was measured, and the moisture absorption elongation of the test piece in the longitudinal direction and the width direction were obtained by the following formula:

moisture absorption elongation (%) = [{length after moisture absorption treatment - original length}/original length] $\times$ 100

The absolute value of the difference between the moisture absorption elongation in the longitudinal direction $N_{MD}$ and the moisture absorption elongation in the width direction $N_{TD}$ ($|N_{MD} - N_{TD}|$) was also calculated, and the anisotropy of the moisture absorption elongation was evaluated according to the following criteria:

Excellent: $|N_{MD} - N_{TD}|$ is less than 0.20
Good: $|N_{MD} - N_{TD}|$ is 0.20 or more and less than 0.30
Fair: $|N_{MD} - N_{TD}|$ is 0.30 or more

(8) Deformation of Laminate

A dimer acid-based polyamide resin aqueous dispersion (manufactured by UNITIKA LTD., solid concentration 20% by mass) and an oxazoline group-containing polymer aqueous solution (manufactured by NIPPON SHOKUBAI CO., LTD., EPOCROS WS-700, solid concentration 25% by mass) were mixed so that the respective solid contents were 100 parts by mass and 10 parts by mass, and stirred at room temperature for 5 min to obtain a coating agent.
A film section (200 mm wide $\times$ 300 mm long) was cut from a semi-aromatic polyamide film in an absolute dry state immediately after production, and the coating agent was applied to the film section with a thickness of 3 $\mu$m after drying and dried under the conditions of 150°C and 30 s to form an adhesive layer on the film section. Further, an electrolytic copper foil (manufactured by Furukawa Electric Co., Ltd., CTS-treated surface, thickness 18 $\mu$m) of the same size as the film section and the film section were laminated via this adhesive layer to obtain a laminate. The laminating was performed under the conditions of a temperature of 180°C, a time of 15 min, and a pressure of 2 MPa using a heat press machine.
A test piece (100 mm wide $\times$ 100 mm long) was cut from the obtained laminate, subjected to heat treatment for 15 s in a reflow solder furnace set at a temperature of 260°C, then taken out of the furnace, and allowed to stand at room temperature (23°C) for 1 h. The deformation of the laminate after the heat treatment was visually checked and evaluated according to the following criteria:

Excellent: The laminate does not deform at all.
Good: The planarity was not impaired, but a little strain occurred.
Fair: The laminate has strain, but there are no practical problems.
Poor: The laminate strains greatly and has no practicality.

(9) Moisture Absorption Curling of Laminate

A test piece (100 mm wide $\times$ 100 mm long) was cut from the laminate obtained in the (8), placed on a level stage with the film surface down, and allowed to stand in an environment at a temperature of 20°C and a humidity of 40% RH for 2 days for humidity control. Then, the test piece was allowed to stand in an environment at a temperature of 20°C and a humidity of 90% RH for 2 days. The moisture absorbency of the film was evaluated by the degree of curling in the test piece, that is, the height of an end of the test piece raised from the stage caused by the test piece curling due to moisture absorption and elongation of the semi-aromatic polyamide film only, since the copper foil is not influenced by moisture absorption.

Excellent: The test piece did not curl.
Good: The test piece curled slightly in the longitudinal direction or the width direction. There are no practical problems.
Fair: The test piece curled in the longitudinal direction or the width direction. The test piece has practical problems.

2. Raw Materials

(1) Semi-aromatic Polyamide

Semi-aromatic polyamides A and B obtained in the following Production Examples 1 and 2 were used.

Production Example 1

3289 Parts by mass of terephthalic acid (TA), 2533 parts by mass of 1,9-nonanediamine (NDA), 633 parts by mass of 2-methyl-1,8-octanediamine (MODA), 48.9 parts by mass of benzoic acid (BA), 6.5 parts by mass (0.1% by mass based on the total of the four polyamide raw materials) of sodium hypophosphite monohydrate, and 2200 parts by mass of distilled water were placed in a reaction kettle and purged with nitrogen. The molar ratio of these raw materials (TA/BA/NDA/MODA) is 99/2/80/20.
The contents of the reaction kettle were stirred at 100°C for 30 min, and then the internal temperature was increased to 210°C over 2 h. At this time, the pressure inside the reaction kettle was increased to 2.12 MPa (22 kg/cm$^2$). The reaction was continued for 1 h as it was, and then the temperature was increased to 230°C. Then, the reaction was performed for 2 h and kept at 230°C, and in parallel the water vapor was gradually removed to keep the pressure at 2.12 MPa (22 kg/cm$^2$) . Next, the pressure was lowered to 0.98 MPa (10 kg/cm$^2$) over 30 min, and the reaction was further performed for 1 h to obtain a prepolymer. The prepolymer was dried at a temperature of 100°C under reduced pressure for 12 h and then ground to a size of 2 mm or less.
Then, the ground prepolymer was solid phase-polymerized under the conditions of a temperature of 230°C and a pressure of 13.3 Pa (0.1 mmHg) for 10 h to obtain a polymer. The polymer was supplied to a twin-screw extruder (manufactured by The Japan Steel Works, Ltd., TEX44C), melted and kneaded under the condition of a cylinder temperature of 320°C, extruded, cooled, and cut to produce pellets of a semi-aromatic polyamide A.

Production Example 2

489 Parts by mass of terephthalic acid (TA), 507 parts by mass of 1,10-decanediamine (DDA), 2.8 parts by mass of benzoic acid (BA), 1.0 part by mass (0.1% by mass based on the total of the three polyamide raw materials) of sodium hypophosphite monohydrate, and 1000 parts by mass of distilled water were placed in a reaction kettle and purged with nitrogen. The molar ratio of these raw materials (TA/BA/DDA) is 99/2/100.
The contents of the reaction kettle were stirred at 28 revolutions per minute at 80°C for 0.5 h and then heated to 230°C. Then, the contents were heated at 230°C for 3 h. Then, the reaction product was cooled and taken out.
The reaction product was ground and then heated in a dryer under a nitrogen gas flow at 220° for 5 h for solid phase polymerization to obtain a polymer. The polymer was supplied to a twin-screw extruder (manufactured by The Japan Steel Works, Ltd., TEX44C), melted and kneaded under the condition of a cylinder temperature of 320°C, extruded, cooled, and cut to produce pellets of a semi-aromatic polyamide B.
The melting points, glass transition temperature, and inherent viscosity of the produced semi-aromatic polyamides are shown in Table 1.

[Table 1]

| Semi-aromatic polyamide type | Molar ratio of raw materials of semi-aromatic polyamide | | | | | Physical properties | | |
|---|---|---|---|---|---|---|---|---|
| | Acid component | | Amine component | | | Inherent viscosity [η] | Melting point | Glass transition temperature |
| | Terephthalic acid (TA) | Benzoic acid (BA) | 1,9-Nonanediamine (NDA) | 2-Methyl-1,8-octanediamine (MODA) | 1,10-Decanediamine (DDA) | d L/g | °C | °C |
| A | 99 | 2 | 80 | 20 | 0 | 117 | 290 | 125 |
| B | 99 | 2 | 0 | 0 | 100 | 124 | 316 | 150 |

(2) Silica

Master chips (M1) to (M3) containing 2% by mass of silica obtained in the following Production Examples 3 to 5 were used.

Production Example 3

98 Parts by mass of a semi-aromatic polyamide A and 2 parts by mass of silica (manufactured by FUJI SILYSIA CHEMICAL LTD., SYLYSIA 310P, average particle diameter 2.7 $\mu$m) were melted and kneaded to make master chips (M1) containing 2% by mass of silica.

Production Example 4

98 Parts by mass of a semi-aromatic polyamide B and 2 parts by mass of silica (manufactured by FUJI SILYSIA CHEMICAL LTD., SYLYSIA 310P, average particle diameter 2.7 $\mu$m) were melted and kneaded to make master chips (M2) containing 2% by mass of silica.

Production Example 5

98 Parts by mass of a semi-aromatic polyamide A and 2 parts by mass of silica (manufactured by Tosoh Silica Corporation, NIPGEL AZ-200, average particle diameter 2.0 $\mu$m) were melted and kneaded to make master chips (M3) containing 2% by mass of silica.

(3) Hindered Phenolic Heat Stabilizer

GA: 3,9-bis[2-{3-(3-t-butyl-4-hydroxy-5-methylphenyl)propionyloxy}-1,1-dimethylethyl]-2,4,8,10-tetraoxaspiro[5.5]undecane (manufactured by Sumitomo Chemical Co., Ltd., SUMILIZER GA-80, pyrolysis temperature 392°C)

Example 1

A semi-aromatic polyamide A, GA, and master chips (M1) were mixed so that the content of GA was 0.2 parts by mass, and the content of silica was 0.1 parts by mass based on 100 parts by mass of the semi-aromatic polyamide A.
This mixture was charged into a 65 mm single-screw extruder having the cylinder temperature set at 295°C (former stage), 320°C (middle stage), and 320°C (latter stage), melted, extruded into a sheet shape from a T-die set at 320°C, electrostatically adhered to a cooling roll having the surface temperature set at 40°C, and cooled to obtain a substantially non-oriented, unstretched sheet having a thickness of 250 $\mu$m.
For the cooling roll, a cooling roll having the surface coated with a ceramic ($Al_2O_3$) with a thickness of 0.15 mm was used. Two carbon brushes were arranged on the upstream side from the point of contact of the roll surface with the film and brought into contact with the cooling roll, and the holder for the carbon brushes was grounded to discharge the surface of the ceramic-coated layer. For the electrode, a tungsten wire having a diameter of 0.2 mm was used, and a voltage of 6.5 kV was applied by a 300 W (15 kV $\times$ 20 mA) direct current high voltage generating apparatus.
The obtained unstretched sheet was cut to 12 $\times$ 12 cm, set in a batch type biaxial stretching machine (manufactured by Imoto machinery Co., LTD., ICM-18BE), and subjected to simultaneous biaxial stretching. For the stretching conditions, the preheating and stretching temperatures were 115°C, the stretching strain rates in the longitudinal direction and the width direction were 3200%/min, and the stretching ratios in the longitudinal direction and the width direction were 3.0 times and 3.3 times respectively.
After the stretching, heat setting treatment at 275°C for 10 s was performed, and relaxation treatment at relaxation rates of 1.0% in the longitudinal direction and 8.0% in the width direction was performed to obtain a semi-aromatic polyamide film having a thickness of 25 $\mu$m. The stretching treatment of the unstretched sheet and the relaxation treatment of the stretched film were performed with the extrusion direction when the unstretched sheet was obtained being the longitudinal direction and the direction orthogonal to the extrusion direction being the width direction.

Examples 2 to 16 and 18 and Comparative Examples 1 to 15

A semi-aromatic polyamide film was obtained as in Example 1 except that the type of the semi-aromatic polyamide, the cooling roll surface temperature, the stretching ratios, the heat setting temperature, and the relaxation rates were changed as described in Table 2, 3, 5, or 6. In Example 18, master chips (M2) were used instead of the master chips (M1). In Comparative Examples 1 and 3, master chips (M1) were not used, and a semi-aromatic polyamide film containing no silica was obtained.

Example 17

A semi-aromatic polyamide A and master chips (M1) were mixed so that the content of silica was 0.1 parts by mass. This mixture was charged into an extruder A, the cylinder temperature was set at 295°C (former stage), 320°C (middle stage), and 320°C (latter stage), and the mixture was melt-extruded (hereinafter referred to as a resin X).

On the other hand, the semi-aromatic polyamide A was charged into an extruder B, the cylinder temperature was set at 295°C (former stage), 320°C (middle stage), and 320°C (latter stage), and the semi-aromatic polyamide A was melt-extruded (hereinafter referred to as a resin Y).

The resins X and Y melted in the extruders A and B respectively were extruded into a sheet shape from a T-die set at 320°C so as to have an X/Y/X three-layer structure, electrostatically adhered to a cooling roll having a surface temperature of 40°C and once cooled, and then further cooled by a cooling roll having a surface temperature of 20°C to obtain an unstretched film having a total thickness of 500 $\mu$m with X/Y/X = 100/300/100 $\mu$m. The specifications of the cooling rolls, the voltage application method, and the like are the same as Example 1.

The obtained unstretched sheet was cut to 12 $\times$ 12 cm, set in a batch type biaxial stretching machine (manufactured by Imoto machinery Co., LTD., ICM-18BE), and subjected to simultaneous biaxial stretching. For the stretching conditions, the preheating and stretching temperatures were 115°C, the stretching strain rates in the longitudinal direction and the width direction were 3200%/min, and the stretching ratios in the longitudinal direction and the width direction were 3.0 times and 3.3 times respectively.

After the stretching, heat setting treatment at 275°C for 10 s was performed, and relaxation treatment at relaxation rates of 2.0% in the longitudinal direction and 8.0% in the width direction was performed to obtain a semi-aromatic polyamide film having a thickness of 50 $\mu$m and having a layer structure of X/Y/X = 10/30/10 $\mu$m.

Example 19

A semi-aromatic polyamide film was obtained as in Example 1 except that sequential biaxial stretching was performed with the stretching ratios in the longitudinal direction and the width direction being 2.5 times and 3.3 times respectively, and relaxation treatment was performed with the relaxation rates in the longitudinal direction and the width direction being 2.0% and 4.0% respectively.

Examples 20 to 38 and Comparative Examples 16 to 21

A semi-aromatic polyamide film was obtained as in Example 19 except that the type of the semi-aromatic polyamide, the cooling roll surface temperature, the stretching ratios, the heat setting temperature, and the relaxation rates were changed as described in Tables 3 to 6. In Example 29, master chips (M3) were used instead of the master chips (M1).

The compositions of the semi-aromatic polyamides, the film production conditions, and the characteristics of the obtained semi-aromatic polyamide films are shown in Tables 2 to 6.

[Table 2]

| | | | Examples | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 |
| Composition of semi-aromatic polyamide | | Type | A | A | A | A | A | A | A | A | A | A | A | A |
| | | Silica content (%) | 0.1 | 0.1 | 0.1 | 0.1 | 0.1 | 0.1 | 0.1 | 0.1 | 0.1 | 0.1 | 0.1 | 0.1 |
| Sem-aromatic polyamide film production conditions | Extrusion | Cooling roll surface temperature (°C) | 40 | 40 | 40 | 40 | 40 | 40 | 40 | 40 | 40 | 40 | 40 | 40 |
| | | Crystallization enthalpy of unstretched film (J/g) | 27 | 27 | 27 | 27 | 27 | 27 | 27 | 27 | 27 | 27 | 27 | 27 |
| | Stretching | Stretching ratios (times) — Longitudinal direction | 3.0 | 3.0 | 3.0 | 3.0 | 3.0 | 3.0 | 3.5 | 3.0 | 3.0 | 3.0 | 3.0 | 3.0 |
| | | Stretching ratios (times) — Width direction | 3.3 | 3.3 | 3.3 | 3.3 | 3.3 | 3.3 | 2.8 | 3.3 | 3.3 | 3.3 | 3.3 | 3.3 |
| | | Stretching method | Simultaneous | | | | | | | | | | | |
| | Heat setting | Temperature (°C) | 275 | 275 | 275 | 275 | 275 | 260 | 275 | 275 | 275 | 275 | 275 | 275 |
| | Relaxation | Relaxation rates (%) — Longitudinal direction | 1.0 | 2.0 | 6.0 | 2.0 | 2.0 | 2.0 | 2.0 | 10 | 2.0 | 6.0 | 100 | 100 |
| | | Relaxation rates (%) — Width direction | 8.0 | 8.0 | 8.0 | 1.0 | 12.0 | 8.0 | 8.0 | 8.0 | 8.0 | 8.0 | 8.0 | 2.0 |

| Characteristics of semi-aromatic polyamide film | | | | Examples | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| | Thickness | | ($\mu$m) | 25 | 25 | 25 | 25 | 25 | 25 | 25 | 50 | 50 | 50 | 50 | 50 |
| | Thermal shrinkage factors (%) | (200°C ×15 min) | Longitudinal direction | - | - | - | - | - | - | - | - | - | - | - | - |
| | | | Width direction | - | - | - | - | - | - | - | - | - | - | - | - |
| | | (250°C ×5 min) | Longitudinal direction ($S_{MD}$) | 1.3 | 0.8 | -0.2 | 0.9 | 0.7 | 1.5 | 1.2 | 1.1 | 0.5 | 0.1 | -0.2 | -0.2 |
| | | | Width direction ($S_{TD}$) | 0.7 | 0.7 | 0.6 | 1.5 | -0.4 | 1.2 | 0.1 | 0.4 | 0.2 | 0.1 | 0.0 | 0.9 |
| | | | $|S_{MD}-S_{TD}|$ | 0.6 | 0.1 | 0.8 | 0.6 | 1.1 | 0.3 | 1.1 | 0.7 | 0.3 | 0.0 | 0.2 | 1.1 |
| | | | Evaluation | Good | Excellent | Fair | Good | Fair | Excellent | Fair | Good | Excellent | Excellent | Excellent | Fair |
| | Tensile breaking elongation (%) | | Longitudinal direction | 125 | 130 | 141 | 129 | 130 | 144 | 92 | 132 | 140 | 147 | 148 | 148 |
| | | | Width direction | 90 | 96 | 102 | 78 | 100 | 121 | 154 | 103 | 110 | 120 | 122 | 99 |
| | Haze | | (%) | 5.1 | 5.1 | 5.2 | 5.0 | 5.3 | 4.8 | 5.1 | 8.1 | 8.0 | 7.9 | 8.1 | 8.0 |
| | Moisture absorption elongation (%) | 20°C× 90%RH | Longitudinal direction ($N_{MD}$) | 0.32 | 0.37 | 0.59 | 0.37 | 0.39 | 0.31 | 0.34 | 0.42 | 0.39 | 0.50 | 0.63 | 0.64 |
| | | | Width direction ($N_{TD}$) | 0.61 | 0.60 | 0.62 | 0.30 | 0.71 | 0.52 | 0.66 | 0.61 | 0.63 | 0.66 | 0.67 | 0.32 |
| | | | $|N_{MD}-N_{TD}|$ | 0.29 | 0.23 | 0.03 | 0.07 | 0.32 | 0.21 | 0.32 | 0.19 | 0.24 | 0.16 | 0.04 | 0.32 |
| | | | Evaluation | Good | Good | Excellent | Excellent | Fair | Good | Fair | Excellent | Good | Excellent | Excellent | Fair |
| Characteristics of laminate | Deformation | 260°C×15 s | | Good | Excellent | Fair | Good | Fair | Excellent | Fair | Good | Excellent | Excellent | Excellent | Fair |
| | Moisture absorption curling | 20°C×90%RH | | Good | Good | Excellent | Excellent | Fair | Good | Fair | Excellent | Good | Excellent | Excellent | Fair |

[Table 3]

| | | | Examples | | | | | | | | | | |
|---|---|---|---|---|---|---|---|---|---|---|---|---|---|
| | | | 13 | 14 | 15 | 16 | 17 | 18 | 19 | 20 | 21 | 22 | 23 |
| Composition of semi-aromatic polyamide | | Type | A | A | A | A | A | B | A | A | A | A | A |
| | | Silica content (%) | 0.1 | 0.1 | 0.1 | 0.1 | 0.1 /0/0.1 | 0.1 | 0.1 | 0.1 | 0.1 | 0.1 | 0.1 |
| Semi-aromatic polyamide film production conditions | Extrusion | Cooling roll surface temperature (°C) | 40 | 40 | 40 | 40 | 40 | 40 | 40 | 40 | 40 | 40 | 40 |
| | | Crystallization enthalpy of unstretched film (J/g) | 27 | 27 | 27 | 27 | 27 | 27 | 27 | 27 | 27 | 27 | 27 |
| | Stretching | Stretching ratios (times) — Longitudinal direction | 3.0 | 3.0 | 3.0 | 3.5 | 3.0 | 2.5 | 2.5 | 2.3 | 2.3 | 2.3 | 2.3 |
| | | Stretching ratios (times) — Width direction | 3.3 | 3.3 | 3.3 | 2.8 | 3.3 | 2.5 | 3.3 | 3.5 | 3.5 | 3.5 | 3.5 |
| | | Stretching method | Simultaneous | | | | | | Sequential | | | | |
| | Heat setting | Temperature (°C) | 275 | 275 | 260 | 275 | 275 | 280 | 275 | 275 | 275 | 275 | 275 |
| | Relaxation | Relaxation rates (%) — Longitudinal direction | 2.0 | 2.0 | 2.0 | 2.0 | 2.0 | 2.0 | 2.0 | 1.0 | 2.0 | 6.0 | 2.0 |
| | | Relaxation rates (%) — Width direction | 1.0 | 12.0 | 8.0 | 8.0 | 8.0 | 8.0 | 4.0 | 8.0 | 8.0 | 8.0 | 1.0 |

EP 3 970 949 B1

18

| | | | | Examples | | | | | | | | | | |
|---|---|---|---|---|---|---|---|---|---|---|---|---|---|---|
| | | | | 13 | 14 | 15 | 16 | 17 | 18 | 19 | 20 | 21 | 22 | 23 |
| Characteristics of semi-aromatic polyamide film | Thickness | | (μm) | 50 | 50 | 50 | 50 | 50 | 25 | 25 | 25 | 25 | 25 | 25 |
| | Thermal shrinkage factors (%) | (200°C ×15 min) | Longitudinal direction | - | - | - | - | - | - | - | - | - | - | - |
| | | | Width direction | - | - | - | - | - | - | - | - | - | - | - |
| | | (250°C ×5 min) | Longitudinal direction ($S_{MD}$) | 0.6 | 0.5 | 1.2 | 1.0 | 0.5 | 0.3 | 0.8 | 1.1 | 0.8 | -0.1 | 0.8 |
| | | | Width direction ($S_{TD}$) | 1.3 | -0.4 | 0.9 | -0.1 | 0.2 | 0.0 | 0.9 | 0.5 | 0.4 | 0.2 | 1.5 |
| | | | $|S_{MD}-S_{TD}|$ | 0.7 | 0.9 | 0.3 | 1.1 | 0.3 | 0.3 | 0.1 | 0.6 | 0.4 | 0.3 | 0.7 |
| | | | Evaluation | Good | Fair | Excellent | Fair | Excellent | Excellent | Excellent | Good | Good | Excellent | Good |
| | Tensile breaking elongation (%) | | Longitudinal direction | 137 | 138 | 131 | 77 | 146 | 110 | 108 | 103 | 105 | 123 | 111 |
| | | | Width direction | 75 | 94 | 112 | 149 | 113 | 119 | 107 | 109 | 104 | 101 | 92 |
| | Haze | | (%) | 8.1 | 8.0 | 7.8 | 8.0 | 5.0 | 6.7 | 3.9 | 4.0 | 4.0 | 3.9 | 3.9 |
| | Moisture absorption elongation (%) | 20°Cx 90%RH | Longitudinal direction ($N_{MD}$) | 0.34 | 0.38 | 0.33 | 0.43 | 0.39 | 0.47 | 0.37 | 0.35 | 0.37 | 0.54 | 0.37 |
| | | | Width direction ($N_{TD}$) | 0.49 | 0.70 | 0.56 | 0.68 | 0.63 | 0.62 | 0.50 | 0.63 | 0.64 | 0.65 | 0.33 |
| | | | $|N_{MD}-N_{TD}|$ | 0.15 | 0.32 | 0.23 | 0.25 | 0.24 | 0.15 | 0.13 | 0.28 | 0.27 | 0.11 | 0.04 |
| | | | Evaluation | Excellent | Fair | Good | Good | Good | Excellent | Excellent | Good | Good | Excellent | Excellent |
| Characteristics of laminate | Deformation | 260°Cx15 s | | Good | Fair | Excellent | Fair | Excellent | Excellent | Excellent | Good | Good | Excellent | Good |
| | Moisture absorption curling | 20°C×90%RH | | Excellent | Fair | Good | Good | Good | Excellent | Excellent | Good | Good | Excellent | Excellent |

EP 3 970 949 B1

[Table 4]

| | | | Examples | | | | | | | | | | | |
|---|---|---|---|---|---|---|---|---|---|---|---|---|---|---|
| | | | 24 | 25 | 26 | 27 | 28 | 29 | 30 | 31 | 32 | 33 | 34 | 35 |
| Composition of semi-aromatic polyamide | Type | | A | A | A | A | A | A | A | A | A | A | A | A |
| | Silica content (%) | | 0.1 | 0.1 | 0.1 | 0.1 | 0.1 | 0.2 | 0.1 | 0.1 | 0.1 | 0.1 | 0.1 | 0.1 |
| Serri-aromatic polyamide film production conditions | Extrusion | Cooling roll surface temperature (°C) | 40 | 40 | 40 | 40 | 40 | 40 | 40 | 40 | 40 | 40 | 40 | 40 |
| | | Crystallization enthalpy of unstretched film (J/g) | 27 | 27 | 27 | 27 | 27 | 27 | 27 | 27 | 27 | 27 | 27 | 27 |
| | Stretching | Stretching ratios (times) — Longitudinal direction | 2.3 | 2.3 | 2.5 | 2.3 | 2.3 | 2.3 | 2.3 | 2.3 | 2.3 | 2.3 | 2.3 | 2.3 |
| | | Stretching ratios (times) — Width direction | 3.5 | 3.5 | 3.3 | 3.5 | 3.5 | 3.5 | 3.5 | 3.5 | 3.5 | 3.5 | 3.5 | 3.5 |
| | | Stretching method | Sequential | | | | | | | | | | | |
| | Heat setting | Temperature (°C) | 275 | 260 | 275 | 275 | 275 | 275 | 275 | 275 | 275 | 275 | 275 | 260 |
| | Relaxation | Relaxation rates (%) — Longitudinal direction | 2.0 | 2.0 | 2.0 | 1.0 | 2.0 | 2.0 | 6.0 | 100 | 100 | 2.0 | 2.0 | 2.0 |
| | | Relaxation rates (%) — Width direction | 120 | 8.0 | 8.0 | 8.0 | 8.0 | 8.0 | 8.0 | 8.0 | 2.0 | 1.0 | 12.0 | 8.0 |

| | | | | Examples | | | | | | | | | | | |
|---|---|---|---|---|---|---|---|---|---|---|---|---|---|---|---|
| | | | | 24 | 25 | 26 | 27 | 28 | 29 | 30 | 31 | 32 | 33 | 34 | 35 |
| Characteristics of semi-aromatic polyamide film | Thickness | | ($\mu$m) | 25 | 25 | 25 | 50 | 50 | 50 | 50 | 50 | 50 | 50 | 50 | 50 |
| | Thermal shrinkage factors (%) | (200°C ×15 min) | Longitudinal direction | - | - | - | - | - | - | - | - | - | - | - | - |
| | | | Width direction | - | - | - | - | - | - | - | - | - | - | - | - |
| | | (250°C ×5 min) | Longitudinal direction ($S_{MD}$) | 0.7 | 1.5 | 1.3 | 1.1 | 0.9 | 0.9 | 0.1 | -0.2 | -0.1 | 1.0 | 0.8 | 1.4 |
| | | | Width direction ($S_{TD}$) | -0.1 | 1.2 | 0.3 | 0.4 | 0.3 | 0.3 | 0.1 | 0.0 | 1.0 | 1.3 | -0.2 | 0.9 |
| | | | $|S_{MD}-S_{TD}|$ | 0.8 | 0.3 | 1.0 | 0.7 | 0.6 | 0.6 | 0.0 | 0.2 | 1.1 | 0.3 | 1.0 | 0.5 |
| | | | Evaluation | Fair | Excellent | Fair | Good | Good | Good | Excellent | Excellent | Fair | Excellent | Fair | Good |
| | Tensile breaking elongation (%) | | Longitudinal direction | 95 | 131 | 94 | 106 | 109 | 110 | 128 | 129 | 129 | 118 | 100 | 134 |
| | | | Width direction | 113 | 130 | 131 | 110 | 107 | 109 | 103 | 103 | 96 | 94 | 121 | 132 |
| | Haze | | (%) | 4.1 | 3.6 | 4.4 | 7.2 | 7.3 | 128 | 7.2 | 7.3 | 7.3 | 7.3 | 7.4 | 6.6 |
| | Moisture absorption elongation (%) | 20°C x 90%RH | Longitudinal direction ($N_{MD}$) | 0.39 | 0.37 | 0.35 | 0.38 | 0.42 | 0.41 | 0.50 | 0.65 | 0.65 | 0.39 | 0.42 | 0.39 |
| | | | Width direction ($N_{TD}$) | 0.66 | 0.49 | 0.61 | 0.64 | 0.66 | 0.66 | 0.67 | 0.70 | 0.35 | 0.36 | 0.71 | 0.52 |
| | | | $|N_{MD}-N_{TD}|$ | 0.27 | 0.12 | 0.26 | 0.26 | 0.24 | 0.25 | 0.17 | 0.05 | 0.30 | 0.03 | 0.29 | 0.13 |
| | | | Evaluation | Good | Excellent | Good | Good | Good | Good | Excellent | Excellent | Fair | Excellent | Good | Excellent |
| Characteristics of laminate | Deformation | 260°C x15 s | | Fair | Excellent | Fair | Good | Good | Good | Excellent | Excellent | Fair | Excellent | Fair | Good |
| | Moisture absorption curling | 20°C x 90%RH | | Good | Excellent | Good | Good | Good | Good | Excellent | Excellent | Fair | Excellent | Good | Excellent |

[Table 5]

| | | | Examples | | | Comparative Examples | | | | | | | | | |
|---|---|---|---|---|---|---|---|---|---|---|---|---|---|---|---|
| | | | 36 | 37 | 38 | 1 | 2 | 3 | 4 | 5 | 6 | 7 | 8 | 9 |
| Composition of semi-aromatic polyamide | | Type | A | A | A | A | A | A | A | A | A | A | A | A |
| | | Silica content (%) | 0.1 | 0.1 | 0.1 | - | 0.1 | - | 0.1 | 0.1 | 0.1 | 0.1 | 0.1 | 0.1 |
| Semi-aromatic polyamide film production conditions | Extrusion | Cooling roll surface temperature (°C) | 40 | 40 | 40 | 50 | 50 | 50 | 50 | 50 | 60 | 70 | 70 | 80 |
| | | Crystallization enthalpy of unstretched film (J/g) | 27 | 27 | 27 | 19 | 19 | 19 | 19 | 19 | 16 | 10 | 10 | 1 |
| | Stretching | Stretching ratios (times) Longitudinal direction | 2.5 | 2.3 | 2.3 | 3.0 | 3.0 | 3.0 | 3.0 | 3.0 | 3.0 | 3.0 | 3.0 | 3.0 |
| | | Width direction | 3.3 | 3.5 | 3.5 | 3.3 | 3.3 | 3.3 | 3.3 | 3.3 | 3.3 | 3.3 | 3.3 | 3.3 |
| | | Stretching method | Sequential | | | Simultaneous | | | | | | | | |
| | Heat setting | Temperature (°C) | 275 | 275 | 275 | 270 | 270 | 270 | 270 | 275 | 275 | 275 | 275 | - |
| | Relaxation | Relaxation rates (%) Longitudinal direction | 2.0 | 1.0 | 1.0 | 0.0 | 0.0 | 2.0 | 2.0 | 1.0 | 1.0 | 2.0 | 2.0 | - |
| | | Width direction | 8.0 | 8.0 | 8.0 | 5.0 | 5.0 | 5.0 | 5.0 | 8.0 | 8.0 | 8.0 | 8.0 | - |

| | | | | | Examples | | | Comparative Examples | | | | | | | | |
|---|---|---|---|---|---|---|---|---|---|---|---|---|---|---|---|---|
| | | | | | 36 | 37 | 38 | 1 | 2 | 3 | 4 | 5 | 6 | 7 | 8 | 9 |
| Characteristics of semi-arorretic polyamide film | Thickness | | | (μm) | 50 | 75 | 100 | 25 | 25 | 25 | 25 | 25 | 25 | 25 | 50 | - |
| | Thermal shrinkage factors (%) | (200°C ×15 min) | Longitudinal direction | | - | - | - | 0.4 | 0.4 | 0.0 | 0.0 | - | - | - | - | - |
| | | | Width direction | | - | - | - | 0.1 | 0.1 | -0.1 | -0.1 | - | - | - | - | - |
| | | (250°C ×5 min) | Longitudinal direction ($S_{MD}$) | | 1.3 | 1.0 | 0.9 | 2.5 | 2.5 | 1.3 | 1.3 | 1.2 | 1.1 | 0.7 | 0.4 | - |
| | | | Width direction ($S_{TD}$) | | 0.2 | 0.3 | 0.1 | 1.1 | 1.1 | 1.0 | 1.0 | 0.6 | 0.6 | 0.5 | 0.1 | - |
| | | | $|S_{MD}-S_{TD}|$ | | 1.1 | 0.7 | 0.8 | 1.4 | 1.4 | 0.3 | 0.3 | 0.6 | 0.5 | 0.2 | 0.3 | - |
| | | | Evaluation | | Fair | Good | Fair | Poor | Poor | Excellent | Excellent | Good | Good | Excellent | Excellent | - |
| | Tensile breaking elongation (%) | | Longitudinal direction | | 97 | 112 | 120 | 98 | 95 | 111 | 109 | 107 | 99 | 93 | 105 | - |
| | | | Width direction | | 134 | 113 | 118 | 64 | 62 | 69 | 67 | 65 | 61 | 60 | 75 | - |
| | Haze | | | (%) | 7.1 | 10.3 | 13.6 | 1.5 | 7.1 | 1.5 | 7.1 | 7.2 | 8.6 | 11.1 | 14.4 | - |
| | Moisture absorption elongation (%) | 20°Cx 90%RH | Longitudinal direction ($N_{MD}$) | | 0.36 | 0.40 | 0.43 | 0.21 | 0.22 | 0.31 | 0.31 | 0.33 | 0.36 | 0.27 | 0.43 | - |
| | | | Width direction ($N_{TD}$) | | 0.64 | 0.67 | 0.69 | 0.54 | 0.53 | 0.55 | 0.55 | 0.61 | 0.60 | 0.55 | 0.68 | - |
| | | | $|N_{MD}-N_{TD}|$ | | 0.28 | 0.27 | 0.26 | 0.33 | 0.31 | 0.24 | 0.24 | 0.28 | 0.24 | 0.28 | 0.25 | - |
| | | | Evaluation | | Good | Good | Good | Fair | Fair | Good | Good | Good | Good | Good | Good | - |
| Characteristics of laminate | Deformation | 260°C×15 s | | | Fair | Good | Fair | Poor | Poor | Excellent | Excellent | Good | Good | Excellent | Excellent | - |
| | Moisture absorption curling | 20°Cx90%RH | | | Good | Good | Good | Fair | Fair | Good | Good | Good | Good | Good | Good | - |

EP 3 970 949 B1

[Table 6]

| | | | Comparative Examples | | | | | | | | | | | |
|---|---|---|---|---|---|---|---|---|---|---|---|---|---|---|
| | | | 10 | 11 | 12 | 13 | 14 | 15 | 16 | 17 | 18 | 19 | 20 | 21 |
| Composition of semi-aromatic polyarride | | Type | A | A | A | A | A | A | A | A | A | A | A | A |
| | | Silica content (%) | 0.1 | 0.1 | 0.1 | 0.1 | 0.1 | 0.2 | 0.1 | 0.1 | 0.1 | 0.1 | 0.1 | 0.2 |
| Serri-aromatic polyarride film production conditions | Extrusion | Cooling roll surface temperature (°C) | 40 | 40 | 40 | 40 | 40 | 40 | 40 | 40 | 50 | 50 | 70 | 40 |
| | | Crystallization enthalpy of unstretched film (J/g) | 27 | 27 | 27 | 27 | 27 | 27 | 27 | 27 | 19 | 19 | 10 | 27 |
| | Stretching | Stretching ratios (times) | Longitudinal direction | 3.0 | 3.0 | 3.0 | 3.0 | 3.0 | 3.0 | 2.3 | 2.8 | 2.3 | 2.3 | 2.5 | 2.3 |
| | | | Width direction | 3.3 | 3.3 | 3.3 | 3.3 | 3.3 | 3.3 | 3.5 | 3.5 | 3.5 | 3.5 | 3.3 | 3.5 |
| | | Stretching method | Simultaneous | | | | | | Sequential | | | | | |
| | Heat setting | Temperature (°C) | 275 | 275 | 250 | 290 | 275 | 275 | 250 | 275 | 275 | 275 | 275 | 275 |
| | Relaxation | Relaxation rates (%) | Longitudinal direction | 0.0 | 2.0 | 2.0 | - | 1.0 | 2.0 | 2.0 | 2.0 | 2.0 | 2.0 | - | 2.0 |
| | | | Width direction | 8.0 | 0.0 | 8.0 | - | 8.0 | 8.0 | 8.0 | 8.0 | 8.0 | 8.0 | - | 8.0 |

EP 3 970 949 B1

(continued)

| Characteristics of serri-aromatic polyamide film | | | | Comparative Examples | | | | | | | | | | | |
|---|---|---|---|---|---|---|---|---|---|---|---|---|---|---|---|
| | | | | 10 | 11 | 12 | 13 | 14 | 15 | 16 | 17 | 18 | 19 | 20 | 21 |
| | Thickness | | ($\mu$m) | 25 | 25 | 25 | - | 75 | 50 | 25 | 50 | 75 | 100 | - | 50 |
| | Thermal shrinkage factors (%) | (200°C ×15 min) | Longitudinal direction | - | - | - | - | - | - | - | - | - | - | - | - |
| | | | Width direction | - | - | - | - | - | - | - | - | - | - | - | - |
| | | (250°C ×5 min) | Longitudinal direction ($S_{MD}$) | 2.0 | 1.0 | 4.5 | - | - | 0.7 | 4.3 | 1.5 | 0.5 | 0.3 | - | 0.9 |
| | | | Width direction ($S_{TD}$) | 0.8 | 2.2 | 3.2 | - | - | 0.2 | 3.1 | 0.6 | 0.2 | 0.0 | - | 0.5 |
| | | | $|S_{MD}-S_{TD}|$ | 1.2 | 1.2 | 1.3 | - | - | 0.5 | 1.2 | 0.9 | 0.3 | 0.3 | - | 0.4 |
| | | | Evaluation | Poor | Poor | Poor | - | - | Good | Poor | Fair | Excellent | Excellent | - | Good |
| | Tensile breaking elongation (%) | | Longitudinal direction | 119 | 122 | 150 | - | - | 129 | 131 | 100 | 100 | 106 | - | 100 |
| | | | Width direction | 86 | 73 | 128 | - | - | 99 | 133 | 65 | 67 | 69 | - | 97 |
| | Haze | | (%) | 5.2 | 5.0 | 4.5 | - | - | 17.5 | 3.6 | 14.6 | 15.1 | 18.3 | - | 15.2 |
| | Moisture absorption elongation (%) | 20°Cx 90%RH | Longitudinal direction ($N_{MD}$) | 0.24 | 0.37 | 0.08 | - | - | 0.33 | 0.09 | 0.29 | 0.40 | 0.45 | - | 0.42 |
| | | | Width direction ($N_{TD}$) | 0.57 | 0.23 | 0.16 | - | - | 0.63 | 0.16 | 0.61 | 0.65 | 0.69 | - | 0.62 |
| | | | $|N_{MD}-N_{TD}|$ | 0.33 | 0.14 | 0.08 | - | - | 0.30 | 0.07 | 0.32 | 0.25 | 0.24 | - | 0.20 |
| | | | Evaluation | Fair | Excellent | Excellent | - | - | Fair | Excellent | Fair | Good | Good | - | Good |
| Characteristics of laminate | Deformation | | 260°C×15 s | Poor | Poor | Poor | - | - | Good | Poor | Fair | Excellent | Excellent | - | Good |
| | Moisture absorption curling | | 20°Cx90%RH | Fair | Excellent | Excellent | - | - | Fair | Excellent | Fair | Good | Good | - | Good |

EP 3 970 949 B1

25

The semi-aromatic polyamide films of Examples 1 to 38 satisfied all the characteristic values defined in the present invention and had small thermal shrinkage factors, low haze, and sufficiently large tensile breaking elongation.

In other words, in the production of a semi-aromatic polyamide film, by lowering the surface temperature of the cooling roll, an unstretched film having an increased crystallization enthalpy was obtained, and for a semi-aromatic polyamide film, by using an unstretched film having an increased crystallization enthalpy, the tensile breaking elongation increased, and the haze was reduced, and by performing relaxation treatment in the longitudinal direction and the width direction, the thermal shrinkage factors in the longitudinal direction and the width direction were reduced, and an increase in tensile breaking elongation was promoted.

In Comparative Example 1, as in Example 2 of Patent Literature 1, a semi-aromatic polyamide containing no silica was used, and an unstretched film was obtained using a cooling roll having a surface temperature of 50°C, then stretched 3.0 times in the longitudinal direction and 3.3 times in the width direction, heat-set at 270°C, and then relaxed at a relaxation rate of 5.0% only in the width direction.

The unstretched film obtained using the cooling roll having a surface temperature of 50°C had a crystallization enthalpy of 19 J/g.

For the semi-aromatic polyamide film obtained from this unstretched film, the thermal shrinkage factors measured under the conditions of 200°C and 15 min were low, 0.4% in the longitudinal direction and 0.1% in the width direction, but the thermal shrinkage factor in the longitudinal direction increased to 2.5% when measured under the conditions of 250°C and 5 min. The tensile breaking elongation was 98% in the longitudinal direction but was 64% in the width direction and low.

For the semi-aromatic polyamide film of Comparative Example 2 obtained as in Comparative Example 1 except that a semi-aromatic polyamide containing silica was used, an increase in haze was observed.

The semi-aromatic polyamide films of Comparative Examples 3 and 4 were obtained as in Comparative Examples 1 and 2 except that relaxation was also performed at a relaxation rate of 2.0% in the longitudinal direction. The thermal shrinkage factor in the longitudinal direction decreased to 1.3%, but the tensile breaking elongation in the width direction was unchanged and low, 67 to 69%.

In Comparative Examples 5 to 9, a semi-aromatic polyamide containing silica was used, and an unstretched film was obtained using a cooling roll having a surface temperature of 50°C or more. The films of Comparative Examples 5 to 7 using this unstretched film had low tensile breaking elongation in the width direction as in Comparative Examples 1 to 4. For the film of Comparative Example 8, a decrease in tensile breaking elongation was suppressed, but the haze was high. In Comparative Example 9, breakage occurred during the film stretching, and a biaxially stretched film was not obtained.

For the films of Comparative Examples 10 to 11, relaxation treatment was not performed in a specific direction, and therefore the thermal shrinkage factor was high in the direction. For the film of Comparative Example 12, the temperature in the heat setting step was low, and therefore the thermal shrinkage factors were high. The dimensional stability was poor in all.

In Comparative Example 13, breakage occurred during the heat setting treatment, and in Comparative Example 14, simultaneous biaxial stretching was attempted using a thick unstretched film, but a biaxially stretched film was not obtained in both.

For the film of Comparative Example 15, the content of silica was high, and therefore the haze was high.

Also for the film of Comparative Example 16 using the sequential biaxial stretching method, the temperature in the heat setting step was low, and therefore the thermal shrinkage factors were high, and the dimensional stability was poor. For the film of Comparative Example 17, the stretching ratios were beyond the preferred ranges, and therefore the tensile breaking elongation was less than 70%, and the haze was high. For the films of Comparative Examples 18 and 19, the crystallization enthalpy of the unstretched film was small, and therefore the tensile breaking elongation was less than 70%, and the haze was high. In Comparative Example 20, breakage occurred during the lateral stretching, and a biaxially stretched film was not obtained. For the film of Comparative Example 21, the content of silica was high, and therefore the haze was high.

**Claims**

1. A semi-aromatic polyamide film having

   a tensile breaking elongation of 70% or more in the longitudinal direction and the width direction, and
   a haze of 14% or less, the film being **characterised by** a thermal shrinkage factor in a longitudinal direction of the film, $S_{MD}$, of -1.0 to 1.5% and by a thermal shrinkage factor in a width direction of the film, $S_{TD}$, of -1.0 to 1.5% as measured under conditions of 250 °C and 5 min.

**2.** The semi-aromatic polyamide film according to claim 1, wherein an absolute value of a difference between $S_{MD}$ and $S_{TD}$ ($|S_{MD} - S_{TD}|$) is less than 1.2.

**3.** A method for producing the semi-aromatic polyamide film according to claim 1, comprising:
biaxially stretching an unstretched film of a semi-aromatic polyamide, wherein in the biaxial stretching, an unstretched film having a crystallization enthalpy of 20 J/g or more is used.

**4.** The method for producing the semi-aromatic polyamide film according to claim 3, wherein in the biaxial stretching, the unstretched film is stretched at a ratio of 2.0 to 3.5 times in a longitudinal direction and stretched at a ratio of 2.0 to 4.0 times in a width direction.

**5.** The method for producing the semi-aromatic polyamide film according to claim 3 or 4, wherein the film after the biaxial stretching is subjected to heat setting treatment at 260 to 280°C and subjected to relaxation treatment at relaxation rates of 1.0 to 10.0% in the longitudinal direction and 1.0 to 12.0% in the width direction.

**6.** An electronic material comprising the semi-aromatic polyamide film according to claim 1 or 2.

**7.** An optical component comprising the semi-aromatic polyamide film according to claim 1 or 2.

**Patentansprüche**

**1.** Halbaromatischer Polyamidfilm, der eine Zugbruchdehnung von 70% oder höher in der Längsrichtung und der Breitenrichtung und eine Trübung von 14% oder niedriger aufweist, wobei der Film **gekennzeichnet ist durch** einen thermischen Schrumpfungsfaktor in einer Längsrichtung des Films, $S_{MD}$, von -1,0 bis 1,5% und durch einen thermischen Schrumpfungsfaktor in einer Breitenrichtung des Films, $S_{TD}$, von -1,0 bis 1,5%, gemessen unter Bedingungen von 250°C und 5 min.

**2.** Halbaromatischer Polyamidfilm nach Anspruch 1, wobei ein Absolutwert einer Differenz zwischen $S_{MD}$ und $S_{TD}$ ($|S_{MD} - S_{TD}|$) kleiner als 1,2 ist.

**3.** Verfahren zur Herstellung des halbaromatischen Polyamidfilms nach Anspruch 1, umfassend:
biaxiales Strecken eines ungestreckten Films aus einem halbaromatischen Polyamid, wobei beim biaxialen Strecken ein ungestreckter Film verwendet wird, der eine Kristallisationsenthalpie von 20 J/g oder höher aufweist.

**4.** Verfahren zur Herstellung des halbaromatischen Polyamidfilms nach Anspruch 3, wobei beim biaxialen Strecken der ungestreckte Film mit einem Verhältnis des 2,0- bis 3,5-Fachen in einer Längsrichtung gestreckt wird und mit einem Verhältnis des 2,0- bis 4.0-Fachen in einer Breitenrichtung gestreckt wird.

**5.** Verfahren zur Herstellung des halbaromatischen Polyamidfilms nach Anspruch 3 oder 4, wobei der Film nach dem biaxialen Strecken Thermofixierungsbehandlung bei 260 bis 280°C unterzogen wird und Relaxationsbehandlung bei Relaxationsraten von 1,0 bis 10,0% in der Längsrichtung und 1,0 bis 12,0% in der Breitenrichtung unterzogen wird.

**6.** Elektronisches Material, das den halbaromatischen Polyamidfilm nach Anspruch 1 oder 2 umfasst.

**7.** Optisches Bauteil, das den halbaromatischen Polyamidfilm nach Anspruch 1 oder 2 umfasst.

**Revendications**

**1.** Film de polyamide semi-aromatique ayant un allongement à rupture en traction de 70 % ou plus dans la direction longitudinale et la direction de la largeur, et un voile de 14 % ou moins, le film étant **caractérisé par** un facteur de retrait thermique dans la direction longitudinale du film, $S_{MD}$, de -1,0 à 1,5 % et par un facteur de retrait thermique dans la direction de la largeur du film, $S_{TD}$, de -1,0 à 1,5 %, tels que mesurés dans des conditions de 5 minutes à 250°C.

**2.** Film de polyamide semi-aromatique selon la revendication 1, dans lequel la valeur absolue de la différence entre $S_{MD}$ et $S_{TD}$ ($|S_{MD} - S_{TD}|$) est inférieure à 1,2.

3.  Procédé pour produire le film de polyamide semi-aromatique de la revendication 1, comprenant :
    l'étirage biaxial d'un film non étiré en un polyamide semi-aromatique, dans lequel, dans l'étirage biaxial, un film non étiré ayant une enthalpie de cristallisation de 20 J/g ou plus est utilisé.

4.  Procédé pour produire un film de polyamide semi-aromatique selon la revendication 3, dans lequel, dans l'étirage biaxial, un film non étiré est étiré en un rapport de 2,0 à 3,5 fois dans la direction longitudinale et étiré en un rapport de 2,0 à 4,0 fois dans la direction de la largeur.

5.  Procédé pour produire un film de polyamide semi-aromatique selon la revendication 3 ou la revendication 4, dans lequel le film après l'étirage biaxial est soumis à un traitement de thermodurcissement à une température de 260 à 280°C et soumis à un traitement de relaxation à des taux de relaxation de 1,0 à 10,0 % dans la direction longitudinale et de 1,0 à 12,0 % dans la direction de la largeur.

6.  Matériau électronique comprenant le film de polyamide semi-aromatique de la revendication 1 ou 2.

7.  Composant optique comprenant le film de polyamide semi-aromatique de la revendication 1 ou 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012067172 A